# EUROPEAN PATENT SPECIFICATION

(11) **EP 1 962 481 B1**
(45) Date of publication and mention of the grant of the patent: **16.12.2009**
(21) Application number: 07102841.9
(22) Date of filing: 21.02.2007
(51) Int. Cl.: H04M 1/60, H04M 1/253, H04W 88/02, H04W 4/00

(54) **Teleconferencing and call multiplexing with mutiple headsets coupled to a single mobile telephone**
Abhalten von Telekonferenzen und Multiplexierung von Anrufen mit mehreren an ein einziges Mobiltelefon angeschlossenen Sprechgarnituren
Téléconférence et multiplexage d'appels avec plusieurs casques raccordés à un seul téléphone mobile

(43) Date of publication of application: 27.08.2008
(73) Proprietor: Research In Motion Limited, Waterloo, Ontario N2L 3W8 (CA)
(72) Inventor: Lai, Frederick Chee-Kiong, Orleans, Ontario K1C 2W3 (CA)
(74) Representative: Moore, Barry

(56) References cited:
- EP-A- 1 401 179
- WO-A-00/16576
- WO-A-00/45570
- "Daptor Two Wireless Phone Adaptor - User Guide JK Audio"[Online] June 2006 (2006-06), XP002444049 Retrieved from the Internet: URL:http://www.jkaudio.com/assets/pdf/user _guides/DaptorTwo-0606w.pdf> [retrieved on 2007-07-24]

## Description

A Bluetooth®-equipped mobile telephone may be paired with another Bluetooth® device such as a hands-free car kit, or a headset for more convenient calling. These devices are examples of a user interface for the telephone which communicate audio signals between the user and the telephone. Device profiles defining the requirements for these classes of device are contained in the Bluetooth® specification, version 1.1. For each class of supported device, the profiles define options and parameter ranges corresponding to each protocol in the Bluetooth® protocol stack.

A hands-free car kit may be used to make and receive calls without physically interacting with the mobile telephone itself. The kit consists of an earpiece and a microphone, and typically uses the audio system of a car lor incoming audio signal. It also includes capabilities for dialing and telephone book management using voice commands. A headset, on the other hand, typically consists only of an earpiece and microphone and associated hardware and/or software, and the mobile telephone itself must be used for dialing.

Although the Bluetooth® specification allows for a master device to maintain simultaneous connections with more than one slave device, a mobile telephone typically supports only a single hands-free device or headset at one time. This limits the number of calls that can be made simultaneously to one call per mobile telephone. Further, only one user can speak on the line per mobile telephone.

The User Guide for the Daptor Two Wireless Phone Adaptor available from JK Audio of Illinois, USA, describes a product that can be connected to the headset jack of a wireless phone using an audio adaptor cord. "Your wireless phone should now recognize Daptor Two as a headset and disable the phone's mic and earpiece." The Daptor Two includes an XLR input connector and a 1/4" mono input connector, and an XLR output connector and a 1/4" mono output connector. One pair of input connector and output connector may be connected to a microphone, microphone preamplifier, headphone and headphone preamplifier "to allow conversation to continue". The other pair of input connector and output connector may be connected to a mixer or tape recorder. It is clear to one skilled in the art from the description and illustrations in the User Guide that all connections to the Daptor Two require physical and electrical contact. It is also clear to one skilled in the art that the audio from the various inputs is mixed in the Daptor Two product and no changes to a standard wireless phone are contemplated.

### GENERAL

According to an embodiment of the invention, there may be provided a method for using external audio devices with a single mobile telephone, the method comprises communicating audio data of a first telephone call involving the mobile telephone with one or more first external audio devices; and communicating audio data of a second telephone call involving the mobile telephone with one or more second external audio devices, the second telephone call being a different telephone call to the first telephone, call wherein the first telephone call and the second telephone call are concurrent for at least a period of time, and wherein each of the external audio devices has audio input functionality and audio output functionality.

According to another embodiment of the invention, there may be provided a mobile telephone comprising a first wireless communication interface through which the mobile telephone is able to communicate with an external communications server to place and receive telephone calls; means for the mobile telephone to communicate with one or more external audio devices, each of which has audio input functionality and audio output functionality; a processor coupled to the first wireless communication interface; an audio subsystem coupled to the processor; and a memory coupled to the processor and arranged to store a telephone application which is arranged to control the audio subsystem and to manage concurrent telephone calls involving the mobile telephone so that audio data of a first of the concurrent telephone calls is communicated with one or more first external audio devices and audio data of a second of the concurrent telephone calls is communicated with one or more second external audio devices.

### OVERVIEW

The ability to pair more than one Bluetooth® slave device to a single master device is possible according to the Bluetooth® specification. If the master device is a mobile telephone, and the slave devices are hands-free devices and/or headsets, then if the mobile telephone is enabled with appropriate hardware, firmware and/or software capabilities, multiple independent calls may be supported concurrently on the slave devices, using the single mobile telephone to make the calls. Alternatively, multiple parties could speak on the same call in a conferenced format without the requirement of sharing a single specialized conferencing telephone. Until recently, supporting multiple headsets on a single mobile telephone has not been technically feasible due to protocol and hardware limitations. However, these limitations are being overcome as higher throughput radio protocols and faster processor speeds become available.

In general, various methods for using external audio devices with a single mobile telephone are proposed, where the external audio devices have audio input functionality and audio output functionality.

To support conferencing, audio data of a single telephone call involving the mobile telephone is communicated with two or more external audio devices. In this manner, two or more users are able to provide audio input for the telephone call and receive audio output of the telephone call via external audio devices that are coupled to the mobile telephone. If two users have external audio devices coupled to the mobile telephone for use in the same telephone call, the result is a 3-way call involving only two telephones. The telephone call involves an external communications server (for example, a mobile switching station or an Internet Protocol (IP) public branch exchange (PBX) using the session initiation protocol (SIP)). Incoming audio data from two or more of the external communications server and the external audio devices is mixed, and the mixed audio data is provided as audio output to the external communications server and to the external audio devices. The mobile telephone may reduce a noise component of the communicated audio data.

To support separate telephone calls that are concurrent for at least a period of time, audio data of a first telephone call involving the mobile telephone is communicated with one or more first external audio devices, and audio data of a second telephone call involving the mobile telephone is communicated with one or more second external audio devices. If there are two or more first external audio devices, then the first telephone call is a conference call. The mobile telephone may reduce a noise component of the communicated audio data.

Any of the external audio devices may be a wireless device. For example, the mobile telephone and the wireless device may be compatible with the same wireless personal area network (WPAN) standard, such as Bluetooth®, ZigBee™, ultra wide-band (UWB), and the like. If two or more of the external audio devices are wireless devices, the mobile telephone will establish and maintain a separate wireless communication session with each of the wireless devices. Establishing a wireless communication session between the wireless device and the mobile telephone may require that the wireless device and the mobile telephone be paired.

An external audio device such as an earbud, headset, hands-free set, microphone or speaker, may be coupled via a wired connection to the mobile telephone.

### BRIEF DESCRIPTION OF THE DRAWINGS

Embodiments are illustrated by way of example and not limitation in the figures of the accompanying drawings, in which like reference numerals indicate corresponding, analogous or similar elements, and in which:

FIG. 1 is a schematic diagram showing multiple external audio devices coupled to a single mobile telephone that can support multiple concurrent telephone calls with call multiplexing;

FIGS. 2A and 2B are a flowchart showing an exemplary method for pairing multiple headsets to a single mobile telephone with call multiplexing;

FIG. 3 is an example of a dialog screen that may be displayed to the user of the mobile telephone when more than one headset is coupled to the mobile telephone and a call is being placed or received;

FIG. 4 is an example of a menu that may be associated with the phone application in the mobile telephone;

FIG. 5 is an example of a configuration screen that may be displayed to the user;

FIG. 6 is another example of a menu that may be associated with the phone application in the mobile telephone;

FIGS. 7A and 7B are schematic diagrams showing multiple external audio devices coupled to a single mobile telephone that can support conferencing among the users of the external audio devices and another party to the telephone call;

FIG. 8 is a flowchart showing an exemplary method for pairing multiple headsets to a single mobile telephone in a conferenced format;

FIG. 9A is a block diagram of exemplary software, firmware and hardware blocks in a mobile telephone that may implement the methods described herein;

FIG. 9B is a block diagram of exemplary software, firmware and hardware blocks in a Bluetooth® headset that may implement the methods described herein;

FIG. 10 is a diagram showing audio inputs to an exemplary audio subsystem such as is shown in FIG. 9A;

FIG. 11 is a block diagram of an exemplary mobile telephone that is able to support the methods described herein; and

FIG. 12 is a schematic diagram showing multiple external audio devices coupled to a single mobile telephone that can support conferencing among the users of the external audio devices and another party to the telephone call, and that can also support multiple concurrent telephone calls.

It will be appreciated that for simplicity and clarity of illustration, elements shown in the figures have not necessarily been drawn to scale. For example, the dimensions of some of the elements may be exaggerated relative to other elements for clarity.

### GENERAL

In the following detailed description, numerous specific details are set forth in order to provide a thorough understanding of embodiments. However it will be understood by those of ordinary skill in the art that the embodiments may be practiced without these specific details. In other instances, well-known methods, procedures, components and circuits have not been described in detail so as not to obscure the embodiments.

The ability to pair more than one Bluetooth® slave device to a single master device is possible according to the Bluetooth® specification. If the master device is a mobile telephone, and the slave devices are hands-free devices and/or headsets, then if the mobile telephone is enabled with appropriate hardware, firmware and/or software capabilities, multiple independent calls may be supported concurrently on the slave devices, using the single mobile telephone to make the calls. Alternatively, multiple parties could speak on the same call in a conferenced format without the requirement of sharing a single specialized conferencing telephone. Until recently, supporting multiple headsets on a single mobile telephone has not been technically feasible due to protocol and hardware limitations. However, these limitations are being overcome as higher throughput radio protocols and faster processor speeds become available.

An exemplary situation where a single mobile telephone may be used to support multiple concurrent telephone calls is as follows:
(1) Jack's battery has just died on his mobile telephone;
(2) Bob's mobile telephone supports multiple headsets and multiple concurrent calls;
(3) Bob needs to call Ned, and Jack needs to call Sandy;
(4) Bob lets Jack pair his wireless headset with Bob's mobile telephone while Bob's wireless headset is also paired to it;
(5) Bob uses the mobile telephone to start a telephone call with Ned;
(6) Jack then uses the mobile telephone to start a telephone call with Sandy.

The two telephone calls may be concurrently supported by a single mobile telephone, but are maintained separately from each other using a call multiplexing strategy.

An exemplary situation where a single mobile telephone may be used to support multiple participants in a single conference call is as follows:
(1) Mike and Jim want to talk to Krishna;
(2) They may use a specialized conference telephone to support a conference call, or they may choose to use Mike's mobile telephone which supports multiple-headset conferencing;
(3) Mike's wireless headset is already paired with his telephone. Mike lets Jim additionally pair his wireless headset with Mike's telephone;
(4) Mike dials Krishna and starts a conversation with him;
(5) Mike starts a conference call, enabling Jim's headset as an active participant in the conversation.

Although the method for supporting multiple headsets in multiple separate conversations and the method for supporting multiple headsets in a single conference call have been presented separately, it is to be understood that both methods may be supported concurrently on the same mobile telephone. An example situation where this might be useful is as follows:
(1) Mary, John, and Ralph are traveling together by car to visit a customer;
(2) Mary, John and Ralph have all paired their headsets to Ralph's mobile telephone;
(3) Mary, John and Ralph all join a conference call with the customer's sales representative, Alex, in preparation for the meeting;
(4) Alex mentions that the customer's most recent order has been shipped but has not yet arrived at the customer's site;
(5) John drops off the conference call;
(6) John starts a new call on Ralph's mobile telephone to the shipping department to determine the status of the order while Mary and Ralph continue the conference call with Alex;
(7) John ends the call to the shipping department, and rejoins the conference call to update the others on the order's status.

### DESCRIPTION OF PREFERRED EMBODIMENTS

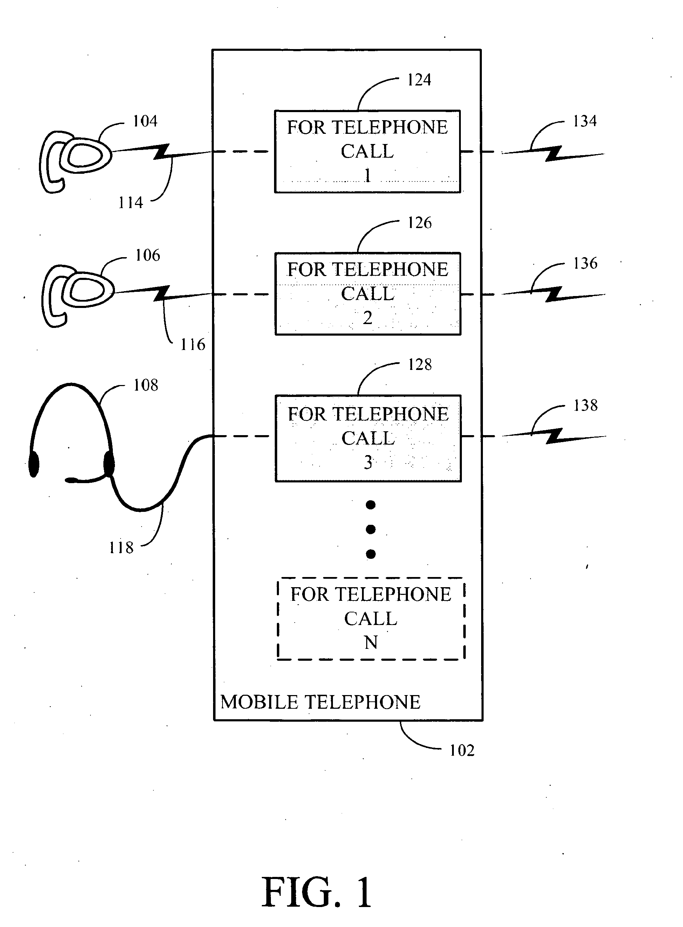

FIG. 1 is a schematic diagram showing multiple external audio devices coupled to a single mobile telephone 102 that can support multiple concurrent telephone calls with call multiplexing. Mobile telephone 102 communicates with wireless headsets 104 and 106 through wireless communication links 114 and 116, respectively. Wireless communication links 114 and 116 are created according to a wireless personal area network (PAN) standard, for example, Bluetooth®, ZigBee™, ultra wide-band (UWB), and the like. Mobile telephone 102 communicates with a wired headset 108 through a wired communication link 118.

Mobile telephone 102 has the capacity to support multiple concurrent telephone calls 124, 126, and 128, each of which may correspond to a different headset. In the example shown in FIG. 1, a first telephone call 124 corresponds to headset 104 and to a wireless communication link 134. A second telephone call 126 corresponds to headset 106 and to a wireless communication link 136. A third telephone call 128 corresponds to headset 108 and to a wireless communication link 138. Telephone calls 124, 126 and 128 are concurrent for at least a period of time. Wireless communication links 134, 136 and 138 may connect mobile telephone 102 to an external communications server. For example, if mobile telephone 102 is using cellular technology to handle the telephone calls, then the external communications server may be a mobile switching station for GSM and CDMA calls. In another example, if mobile telephone 102 is using Voice over IP (VoIP) technology and wireless local area network (WLAN) technology to handle the telephone calls, the external communications server may be an IP PBX using SIP. Any other suitable intermediary communications device may be used instead.

In this example, and throughout the application, a hands-free set, or any external audio device having audio input functionality and audio output functionality, could take the place of any of the headsets. Moreover, although this example describes three concurrent telephone calls, two or more than three concurrent telephone calls may be handled in other examples.

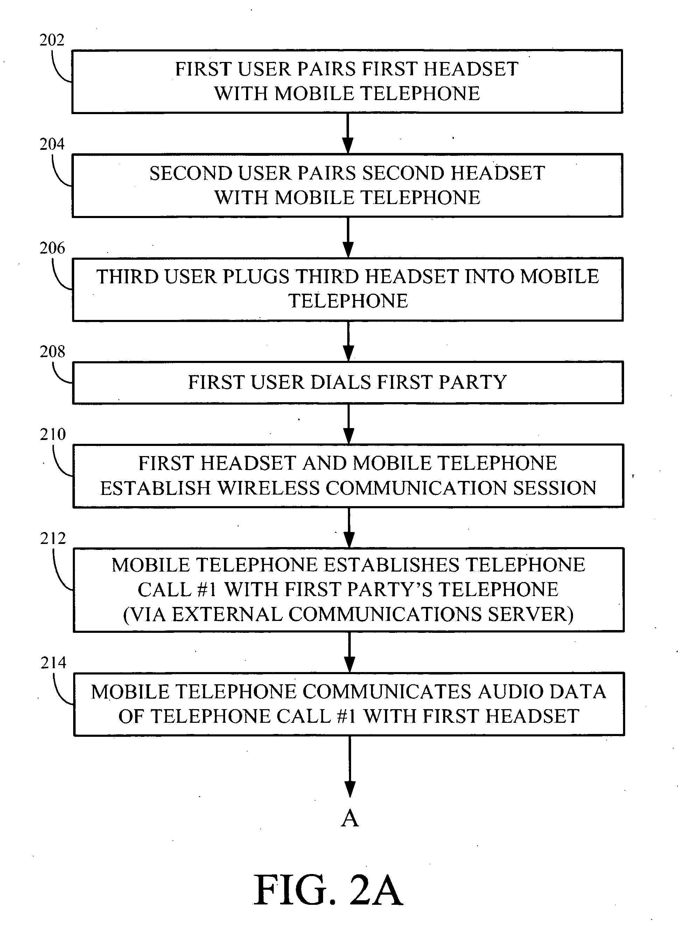

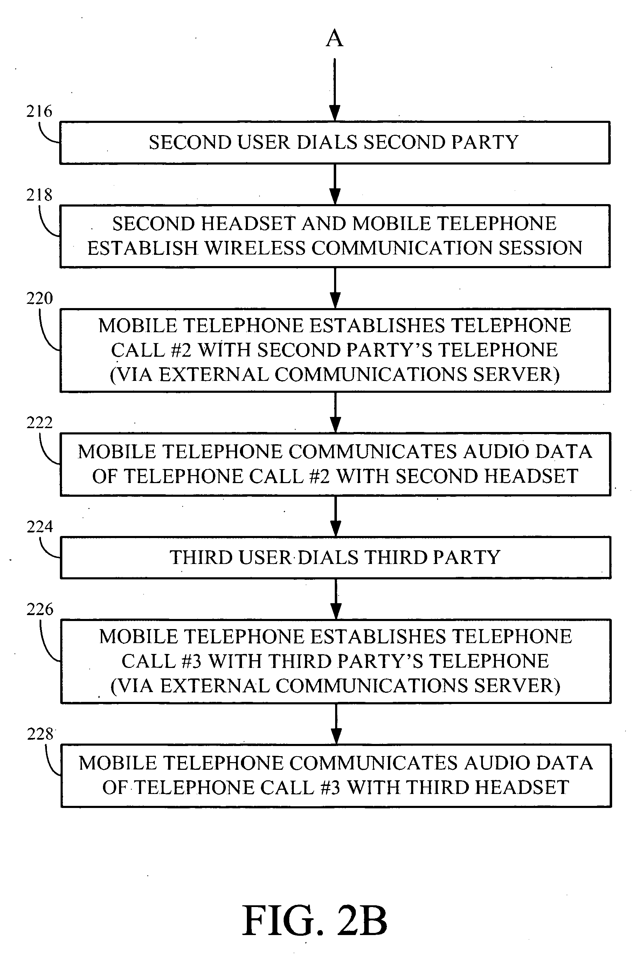

FIGS. 2A and 2B show an exemplary method for supporting multiple concurrent telephone calls on a single mobile telephone such as is shown in FIG. 1. Many variations in the order of activities of this method are feasible, as long as a headset is paired or otherwise coupled to the mobile telephone prior to its use.

At 202, headset 104 is paired to mobile telephone 102 in preparation for a telephone call by a first user. At 204, headset 106 is paired to mobile telephone 102 in preparation for a telephone call by a second user. At 206, headset 108 is plugged into mobile telephone in preparation for a telephone call by a third user.

At 208, the first user dials a first party using mobile telephone 102. This may be accomplished, for example, by using user interface elements of mobile telephone 102 such as a keyboard, trackball, thumbwheel and the like. At 210, headset 104 and mobile telephone 102 establish a wireless communication session. Alternatively, this session may be established before the first user dials the first party, thus enabling the dialing to be done via a voice command provided by the first user to audio input functionality of headset 104. At 212, mobile telephone 102 establishes a telephone call #1 with the telephone of the first party. This telephone call is established via an external communications server. Once the telephone call has been established, audio data of the telephone call is communicated by mobile telephone 102 with headset 104 at 214 via wireless link 114. Mobile telephone 102 receives audio data originating at headset 104 and transmits to headset 104 audio data of the telephone call arriving at mobile telephone 102 via the external communications server.

At 216, the second user dials a second party using mobile telephone 102. This may be accomplished, for example, by using user interface elements of mobile telephone 102 such as a keyboard, trackball, thumbwheel and the like. At 218, headset 106 and mobile telephone 102 establish a wireless communication session. Alternatively, this session may be established before the second user dials the second party, thus enabling the dialing to be done via a voice command provided by the second user to audio input functionality of headset 106. At 220, mobile telephone 102 establishes a telephone call #2 with the telephone of the second party. This telephone call is established via an external communications server. Once the telephone call has been established, audio data of the telephone call is communicated by mobile telephone 102 with headset 106 at 222 via wireless link 116. Mobile telephone 102 receives audio data originating at headset 106 and transmits to headset 106 audio data of the telephone call arriving at mobile telephone 102 via the external communications server.

At 224, the third user dials a third party using mobile telephone 102. This may be accomplished, for example, by using user interface elements of mobile telephone 102 such as a keyboard, trackball, thumbwheel and the like. Alternatively, this may be accomplished via a voice command provided by the third user to audio input functionality of headset 108. At 226, mobile telephone 102 establishes a telephone call #3 with the telephone of the third party. This telephone call is established via an external communications server. Once the telephone call has been established, audio data of the telephone call is communicated by mobile telephone 102 with headset 108 at 228 via wired link 118. Mobile telephone 102 receives audio data originating at headset 108 and transmits to headset 108 audio data of the telephone call arriving at mobile telephone 102 via the external communications server.

The three concurrent telephone calls are carried on independently on mobile telephone 102 using a call multiplexing algorithm.

The telephones of the first, second and third parties may be any suitable communication device including, for example, a landline telephone, a cordless telephone, a cellular telephone, a smart phone, an Internet Protocol (IP) phone, a computer equipped with a VoIP application, and the like.

There are limitless possibilities for the user interface (UI) presented to a user of the mobile telephone, depending on the order of the activities in the method.

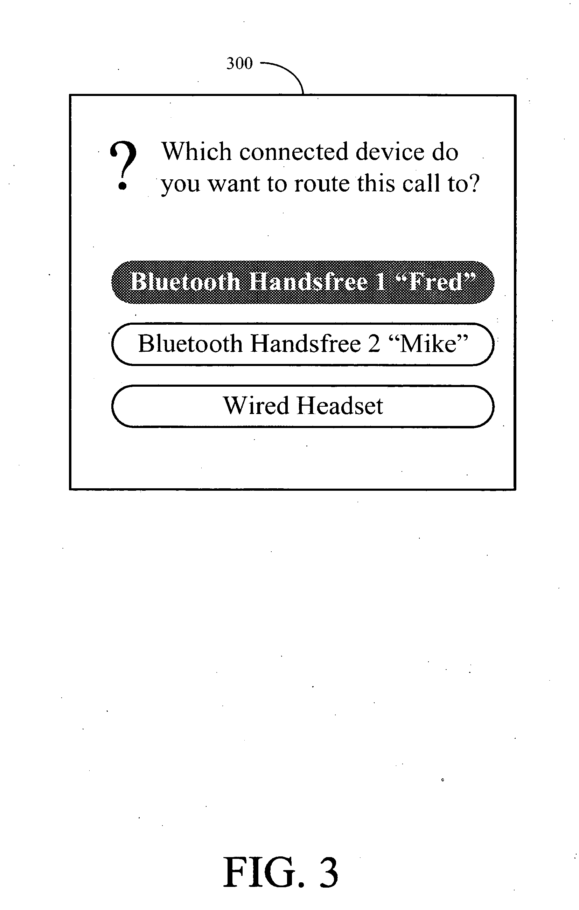

FIG. 3 is an example of a dialog screen 300 that may be displayed to the user when more than one headset is coupled to the mobile telephone and a call is being placed or received. When a telephone call is outgoing or incoming, dialog screen 300 asks the user to select which of the connected devices to route the call to. For example, dialog screen may be displayed to the user in connection with the first user dialing the first party at 208, in connection with the second user dialing the second party at 216, and in connection with the third user dialing the third party at 224.

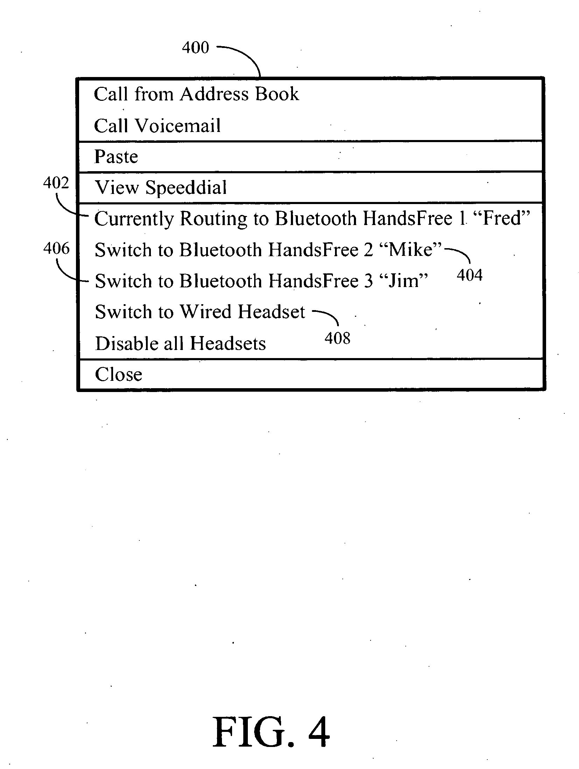

Alternatively, selection of the headset to which a call is to be routed may involve a menu. FIG. 4 is an example of a menu 400 that may be associated with the phone application in the mobile telephone. A menu item 402 indicates which headset the mobile telephone is routing the call to, and menu items 404, 406 and 408 enable the user to cause the mobile telephone to route the call to a different headset. In this example, three different wireless headsets are paired to the mobile telephone and a wired headset is connected to the mobile telephone.

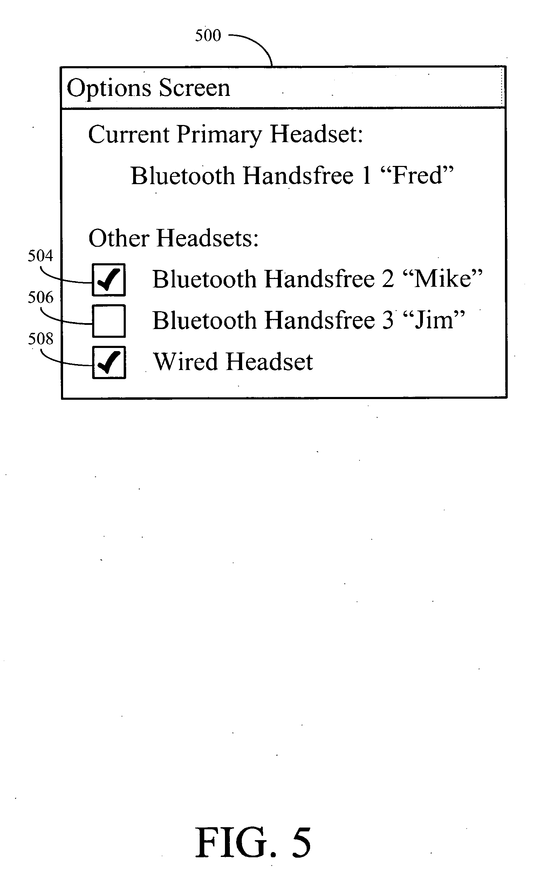

The UI may include a configuration screen indicating which headsets will be activated for all future calls. FIG. 5 is an example of a configuration screen 500 that may be displayed to the user. Configuration screen 500 enables the user to specify which headset is the primary headset and includes checkboxes 504, 506 and 508 to enable the user to specify which other headsets will be activated for future calls. Routing decisions are then limited to one of the active headsets. In this example, the wireless headset with the device name "Jim" is not active.

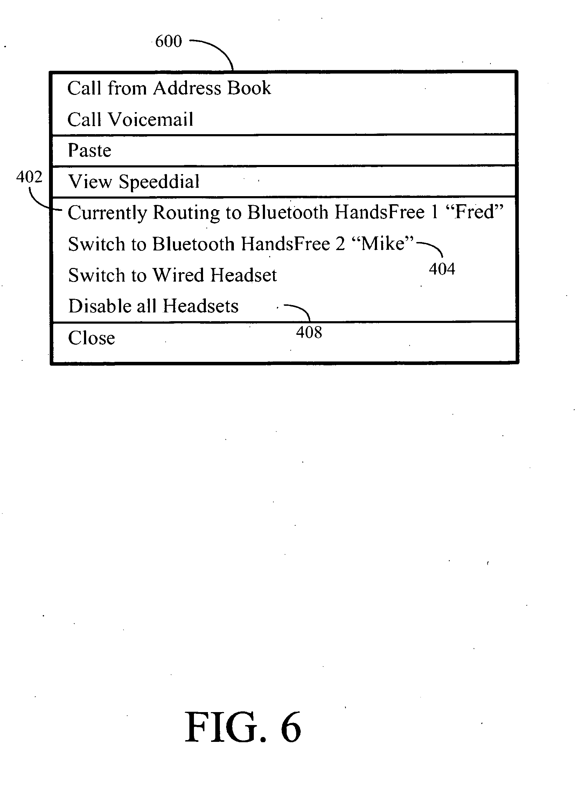

FIG. 6 is an example of a menu 600 that may be associated with the phone application in the mobile telephone. Menu 600 differs from menu 400 of FIG. 4 in that menu item 406 is omitted. Since the wireless headset with the device name "Jim" has been configured as not active, the user is unable to switch the routing of an incoming or outgoing call to that headset.

The issue of receiving calls when different headsets are paired or otherwise coupled to the mobile telephone, and deciding which headset to route the call to is a UI problem, which can be addressed either on the mobile telephone's UI or by using a possibly dedicated button on the headset and/or using speech recognition. One possible UI solution is that when a call comes into a mobile telephone with N headsets coupled to it, all N headsets alert their respective users, and the first headset which answers the call receives the call.

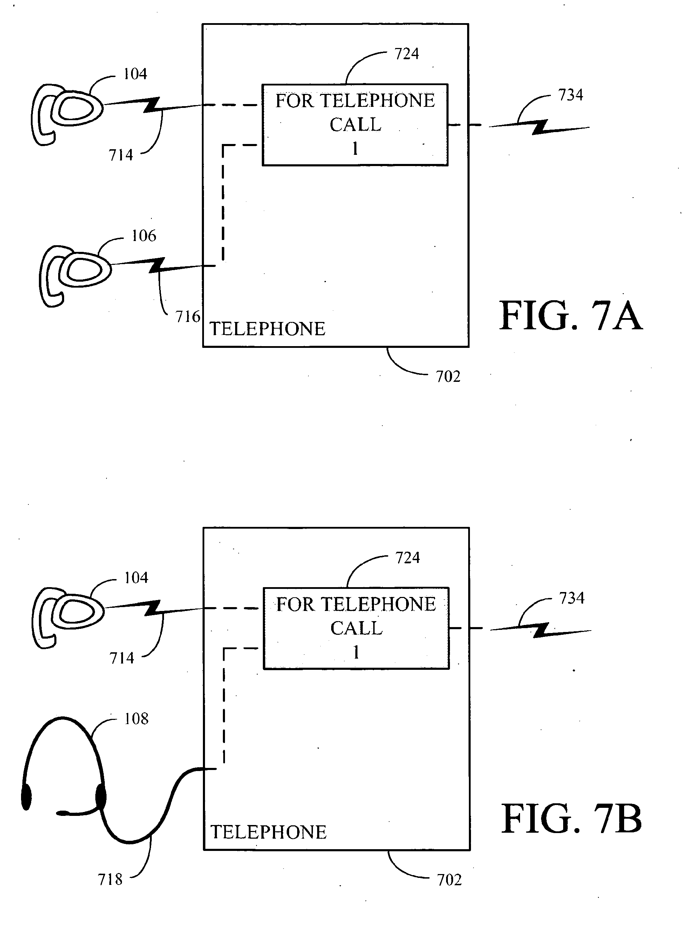

FIGS. 7A and 7B are schematic diagrams showing multiple external audio devices coupled to a single mobile telephone 702 that can support conferencing among the users of the external audio devices and another party to the telephone call. In FIG. 7A, mobile telephone 702 communicates with wireless headsets 104 and 106 through wireless communication links 714 and 716 respectively. Wireless communication links 714 and 716 are created according to a WPAN standard, for example, Bluetooth®, ZigBee™, UWB, and the like. In FIG. 7B, wireless headset 106 is absent and in its stead, mobile telephone 702 communicates with a wired headset 108 through a wired communication link 718.

Mobile telephone 702 allows headsets 104 and 106 (or 104 and 108) to participate simultaneously in a single telephone call 724 using a conferenced format. Additional headsets (not shown) may be supported in this conversation up to some pre-determined maximum number of supportable devices.

In the example shown in FIGS. 7A and 7B, telephone call 724 corresponds to a wireless communication link 734, which connects mobile telephone 702 to an external communications server. For example, if mobile telephone 702 is using cellular technology to handle the telephone calls, then the external communications server may be a mobile switching station for GSM and CDMA calls. In another example, if mobile telephone 702 is using VoIP technology and WLAN technology to handle the telephone calls, the external communications server may be an IP PBX using SIP. Any other suitable intermediary communications device may be used instead.

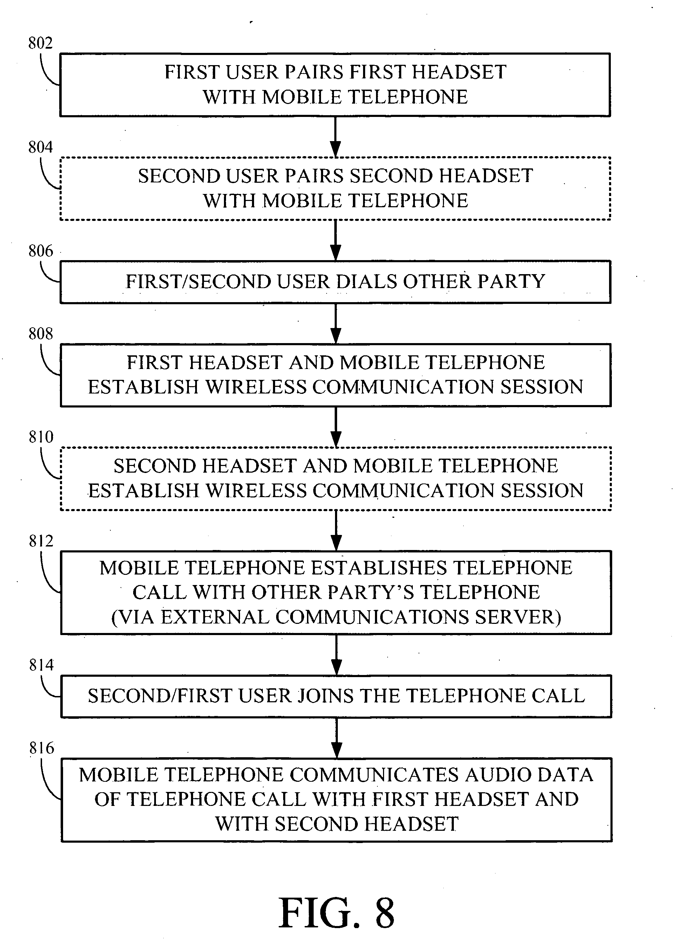

FIG. 8 shows an exemplary method for supporting a conference call with multiple headsets on a single mobile telephone such as is shown in FIGS. 7A and 7B. Many variations in the order of activities of this method are feasible, as long as a headset is paired or otherwise coupled to the mobile telephone prior to its use. At 802, headset 104 is paired to mobile telephone 702 in preparation for participation in a telephone call by a first user. At 804, headset 106 is paired to mobile telephone 702 in preparation for participation in the same telephone call by a second user.

At 806, the first user (or alternatively, the second user) dials another party using mobile telephone 702. This may be accomplished, for example, by using user interface elements of mobile telephone 702 such as a keyboard, trackball, thumbwheel and the like. At 808, headset 104 and mobile telephone 702 establish a wireless communication session, and at 810, headset 106 and mobile telephone 702 establish a wireless communication session. The establishment of a wireless communication session between mobile telephone 702 and headset 104/106 may occur before the other party is dialed, thus enabling the dialing to be done via a voice command provided by the first (second) user to audio input functionality of headset 104 (106).

In the case of FIG. 7B, where only one of the headsets is a wireless device, pairing the second headset and establishing a wireless communication session between the mobile telephone and the second headset are omitted, and instead, there is a step of coupling headset 108 to mobile telephone 702.

At 812, mobile telephone 702 establishes a telephone call with the telephone of the other party. This telephone call is established via an external communications server. Once the telephone call has been established, the second user (or alternatively, the first user) may join the telephone call at 814.

At 816, mobile telephone 702 communicates audio data of the telephone call with headset 104 and with headset 106 (108).

There are limitless possibilities for the UI presented to a user of the mobile telephone, depending on the order of the activities in the method. For example, a possible UI solution for getting a paired or otherwise coupled headset to join into an ongoing call is to have the headset recognizing a voice command, a particular button press or a unique sequence of button presses that would be interpreted as the "join call" command on the headset device. For instance, the user could say "join". The voice command would be interpreted by the headset or by the mobile telephone, whichever is configured to do the speech recognition.

This UI solution is to be distinguished from a possible UI solution for getting a paired or otherwise coupled headset to start a new call while another call (conferenced or otherwise) is currently in progress. For instance, the user could say "new call", and recite the telephone number to dial into the headset. The voice command and telephone number would be interpreted by the headset or the mobile telephone, whichever is configured to do the speech recognition. Alternatively, a particular button press or a unique sequence of button presses could be interpreted as the "new call" command on the headset device.

It is obvious to a person of ordinary skill how to extend the examples described with respect to FIGS. 7A, 7B and 8 to more than two external audio devices all participating in a single telephone call.

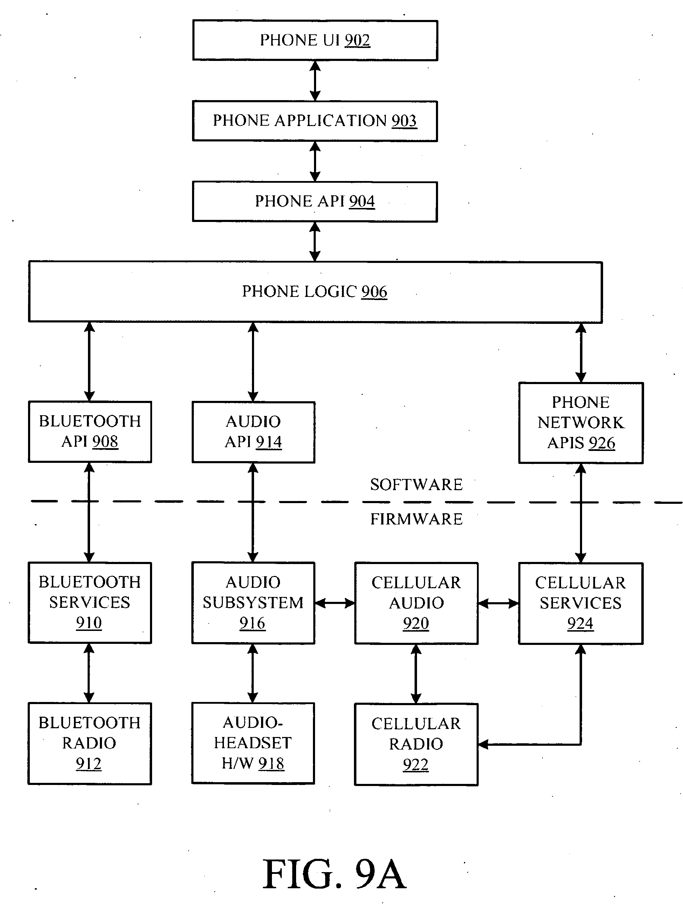

FIG. 9A is a block diagram of exemplary software, firmware and hardware blocks in a mobile telephone that may implement the methods described herein. Telephone user interface (UI) software 902 interfaces with a telephone application module 903, which in turn, interfaces with a telephone Application Programming Interface (API) module 904. Telephone API module 904 provides a front end to a software block 906 which is responsible for telephone logic. Block 906 coordinates signaling to a Bluetooth® API module 908 and an audio API module 914. Bluetooth® API module 908 interfaces with a Bluetooth® services module 910, which in turn, interfaces with a Bluetooth® radio 912. Audio API module 914 interfaces with an audio subsystem 916, which in turn, interfaces with audio headset hardware 918. For example, audio headset hardware 918 may have a direct connection to a microphone/headset earbud (not shown) via wire. Audio subsystem 916 also interfaces with a cellular audio software block 920. Cellular audio software block 920 interfaces with a cellular radio 922. Cellular radio 922 and cellular audio software block 920 interface with a cellular services block 924. Cellular services block 924 interfaces with phone network APIs 926 to communicate with telephone logic block 906.

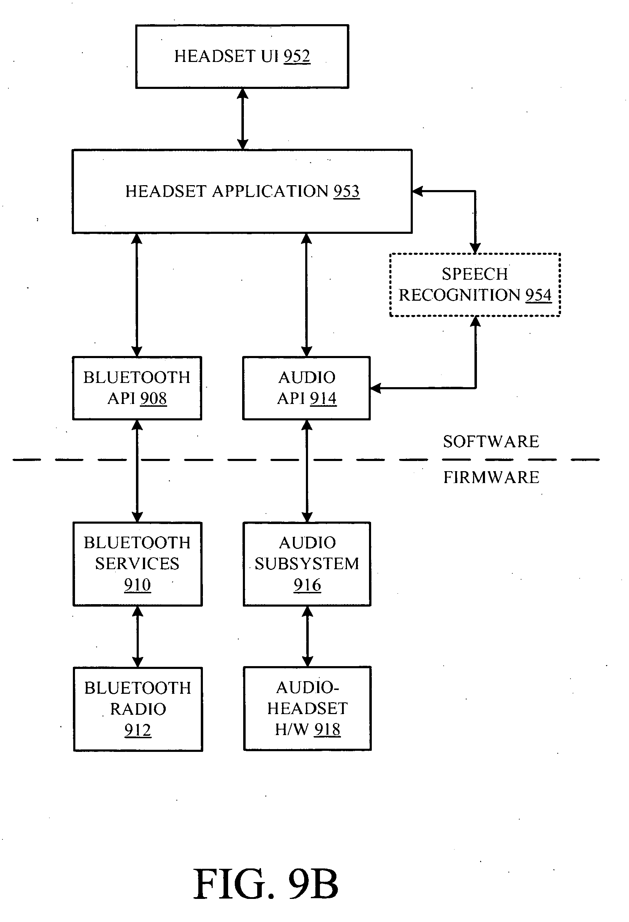

FIG. 9B is a block diagram of exemplary software, firmware and hardware blocks in a Bluetooth® headset that may implement the methods described herein. Many of the blocks of FIG. 9A are repeated in this diagram, and will not be discussed again. Headset UI software 952 interfaces with a headset application 953. The UI elements of the headset may comprise one or more buttons and possibly a microphone if speech recognition of voice commands is involved.

Headset application 953 interfaces with Bluetooth® API module 908 and audio API module 914. An optional speech recognition module 954 may interface with audio API module 914 and headset application 954.

The mobile telephone's configuration application typically does the pairing operation between the mobile telephone and wireless devices. However, in this case, it is possible that telephone application module 903 does the pairing operation out of convenience, or proxies the operation through the configuration application. Ultimately, whichever application does the pairing, Bluetooth® API module 908 is invoked to pair the mobile telephone to the wireless headset. From there, the Bluetooth® services module 910 runs the Bluetooth® radio 912, which invokes communication with the Bluetooth® headset.

During telephone calls, telephone application module 903 may instruct phone logic block 906 to start full duplex audio communication between the headset and the mobile telephone. Telephone API module 904 may trigger phone logic block 906 to start the Bluetooth® services for an asynchronous audio connection with the Bluetooth® headset. If handshaking with the Bluetooth® headset is successful, the audio packets will flow between the devices, thereby creating the audio link required for the telephone call.

The telephone call gets established by the telephone application through the telephone network APIs 926. There may be separate telephone network APIs for different types of cellular user (e.g. one for GSM, one for CDMA, one for IDEN, etc.) and separate telephone network APIs for VoIP (of which there can be multiple flavours, e.g. SIP, skinny, H323). The user may pre-select from a list of available options which telephone network to use. The software or configuration may limit the possibilities to a manageable number. The current state of the art is about two possibilities, namely SIP, VoIP and 3G. The telephone application chooses the appropriate software API to invoke to properly route the call. In short, the telephone UI and the telephone application resolve which network to use.

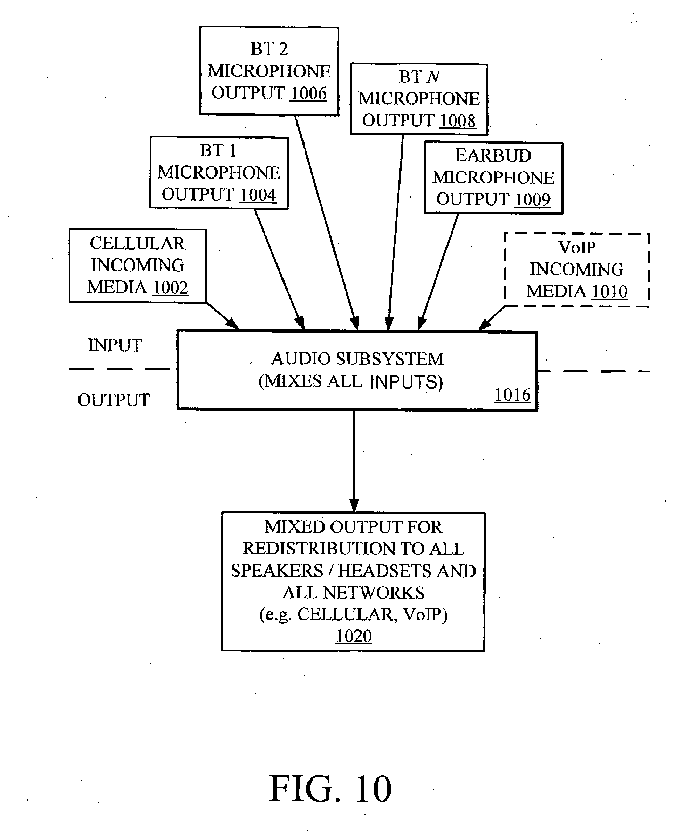

When communicating audio data from the Bluetooth® headset, the incoming data to the mobile telephone is digital in nature. When using the wired headset in conjunction with the Bluetooth® headset, the data from the wired headset's microphone must be digitized through the use of an analogue-to-digital converter. After passing through a digital mixer, as in FIG. 10 below, the audio data packets of digital audio information are fed to the Bluetooth® audio buffer(s) for each of the participating wireless headsets through the Bluetooth® API 508. These packets are sent to the Bluetooth® headset.

The mixed digital audio output is also routed to the wired headset (if it is participating on the call) and also back out to the telephone line output (i.e. line out to the cellular network and/or SIP PBX).

FIG. 10 is a diagram showing audio inputs 1002, 1004, 1006, 1008, 1009 and 1010 to audio subsystem 916 during a single telephone call. Input 1002 corresponds to audio data from a cellular telephone connection. Alternatively, if a VoIP connection is being used for the telephone call, input 1010 corresponding to incoming VoIP data from the Internet to the mobile telephone may replace input 1002. Inputs 1004, 1006, and 1008 correspond to voice data received from the microphones of connected wireless headsets. Input 1004 corresponds to a first wireless headset, input 1006 corresponds to a second wireless headset, and input 1008 corresponds to an *N*th wireless headset, where N is the total number of connected wireless headsets. Audio subsystem 916 receives all these inputs and mixes them into an output signal 1020 for distribution to all the speakers and headsets corresponding to the connected wireless devices and also for output on the cellular or VoIP connection. Audio subsystem 916 may add noise-gates and/or echo cancellers to the inputs and outputs to reduce noise and improve the signal. Alternatively or additionally, other digital signal processing algorithms for noise reduction may be applied.

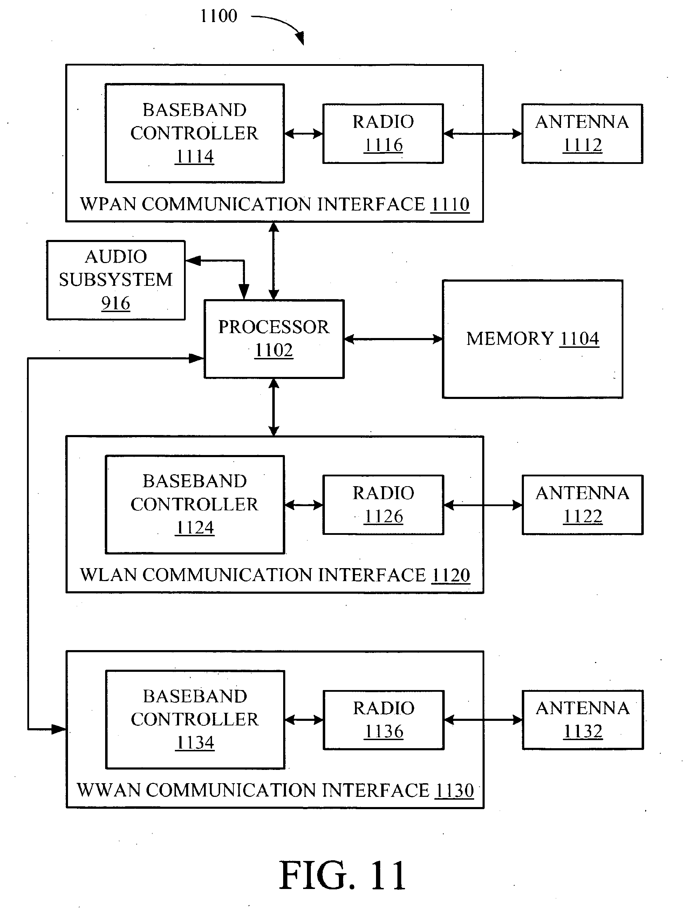

FIG. 11 is a block diagram of an exemplary mobile telephone that is able to support the methods described herein. Mobile telephone 1100 comprises a processor 1102 coupled to audio subsystem 516, and a memory 1104 coupled to processor 1102.

Mobile telephone 1100 comprises a communication interface 1110 coupled to processor 1102 and to an antenna 1112. Communication interface 1110 comprises a baseband controller 1114 coupled to a radio 1116, which in turn is coupled to antenna 1112. Communication interface 1110 is compatible with a WPAN standard, such as Bluetooth®, ZigBee™, UWB, and the like.

Mobile telephone 1100 also comprises a WLAN communication interface 1120 coupled to processor 1102 and to an antenna 1122. WLAN communication interface 1120 comprises a baseband controller 1124 coupled to a radio 1126, which in turn is coupled to antenna 1122. Communication interface 1120 is compatible with a WLAN standard, such as IEEE 802.11, ETSI HiperLAN, and the like.

Mobile telephone 1100 also comprises a wireless wide area network (WWAN) communication interface 1130 coupled to processor 1102 and to an antenna 1132.
WWAN communication interface 1130 is compatible with a cellular communications standard, such as GSM, CDMA, and the like.

Mobile telephone 1100 may include other components that, for clarity, are not shown. Other mobile telephones may comprise only one of WLAN communication interface 1120 and WWAN communication interface 1130.

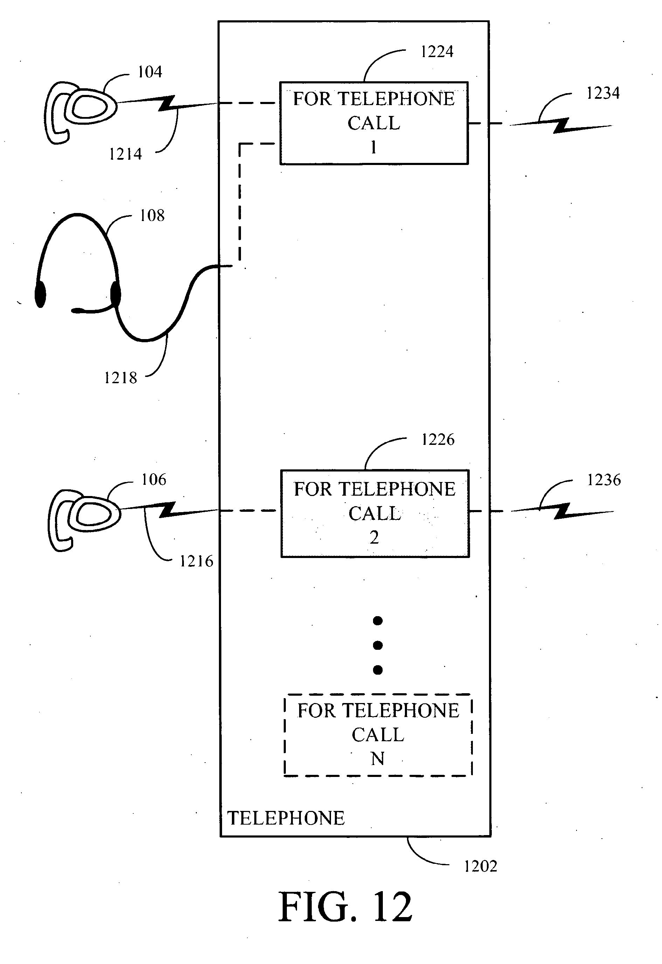

FIG. 12 is a schematic diagram showing multiple external audio devices coupled to a single mobile telephone 1202 that can support conferencing among the users of the external audio devices and another party to the telephone call, and that can also support multiple concurrent telephone calls. Mobile telephone 1202 communicates with wireless headsets 104 and 106 through wireless links 1214 and 1216, respectively. Wireless communication links 114 and 116 are created according to a WPAN standard, for example, Bluetooth®, ZigBee™, UWB, and the like. Mobile telephone 1202 communicates with a wired headset 108 through a wired communication link 1218.

Mobile telephone 1202 allows headsets 104 and 108 to participate simultaneously in a single telephone call 1224 using a conferenced format. Additional headsets (not shown) may be supported in this conversation up to some pre-determined maximum number of supportable devices. Telephone call 1224 corresponds to a wireless communication link 1234, which connects mobile telephone 1202 to an external communications server. For example, if mobile telephone 1202 is using cellular technology to handle the telephone calls, then the external communications server may be a cellular base station. In another example, if mobile telephone 1202 is using VoIP technology and WLAN technology to handle the telephone calls, the external communications server may be an access point. Any other suitable intermediary communications device may be used instead.

Mobile telephone 1202 allows headset 106 to participate in another telephone call 1226 which is concurrent with telephone call 1224 for at least a period of time. Telephone call 1226 corresponds to a wireless communication link 1236, which connects mobile telephone 1202 to an external communications server. Call multiplexing functionality in mobile telephone 1202 keeps the control and audio for the different telephone calls separate. Audio mixing functionality in mobile telephone 1202 is used to mix audio input for telephone call 1224 from headset 104, headset 108 and the external communications server, and to output the mixed audio to headset 104, headset 108 and the external communications server.

Although the subject matter has been described in language specific to structural features and/or methodological acts, it is to be understood that the subject matter defined in the appended claims is not necessarily limited to the specific features or acts described above. Rather, the specific features and acts described above are disclosed as example forms of implementing the claims.

## Claims

1. A method for using external audio devices (104, 106, 108) associated with a single mobile telephone (102, 1202), the method comprising:
communicating audio data of a first telephone call (124, 1224) involving the mobile telephone (102, 1202) with one or more first external audio devices (104, 108); and
communicating audio data of a second telephone call (126, 1226) involving the mobile telephone (102, 1202) with one or more second external audio devices (106), the second telephone call being a different telephone call to the first telephone call,
wherein the first telephone call (124, 1224) and the second telephone call (126, 1226) are concurrent for at least a period of time, and
wherein each of the external audio devices (104, 106, 108) has audio input functionality and audio output functionality.

2. The method of claim 1, wherein at least two of the external audio devices are wireless devices (104, 106), the method further comprising:
establishing and maintaining separate wireless communication sessions between the mobile telephone (102, 702, 1202) and the wireless devices (104, 106).

3. A mobile telephone (102, 1100, 1202) comprising:
a first wireless communication interface (1120, 1130) through which the mobile telephone (1100) is able to communicate with an external communications server to place and receive telephone calls;
means (1110, 918) for the mobile telephone (1100) to communicate with one or more associated external audio devices (104, 106, 108), each of which has audio input functionality and audio output functionality;
a processor (1102) coupled to the first wireless communication interface (1120, 1130);
an audio subsystem (916) coupled to the processor (1102); and
a memory (1104) coupled to the processor (1102) and arranged to store a telephone application (903) which is arranged to control the audio subsystem (916) and to manage concurrent telephone calls involving the mobile telephone (102, 1100, 1202) so that audio data of a first of the concurrent telephone calls (124, 1224) is communicated with one or more first external audio devices (104, 108) and audio data of a second of the concurrent telephone calls (126, 1226) is communicated with one or more second external audio devices (106).

4. The mobile telephone (102, 1100, 1202) of claim 3, wherein at least one of the first external audio devices is a wireless device (104), and the means comprise:
a second wireless communication interface (1110) coupled to the processor (1102) and through which the mobile telephone (1100) is able to communicate with one or more wireless external audio devices (104, 106).

5. The mobile telephone (102, 1100, 1202) of claim 4, wherein at least one of the second external audio devices is a wired device (108), and the means comprise:
an audio hardware component (918) coupled to the audio subsystem (918) and which is connectable to the wired device (108).

6. The mobile telephone (102, 1100, 1202) of claim 4 or 5, wherein the external communications server is a mobile switching station and the first wireless communication interface (1120) is compatible with a cellular communication standard.

7. The mobile telephone (102, 1100, 1202) of any one of claims 4 to 6, wherein the external communications server is an Internet Protocol public branch exchange and the first wireless communication interface (1130) is compatible with a wireless local area network standard.

8. A machine-readable medium storing instructions which, when executed by at least one processor of a computing device, adapt said computing device to perform the method of claim 1 or claim 2.

## Patentansprüche

1. Verfahren zur Verwendung externer Audiovorrichtungen (104, 106, 108), die zu einem einzelnen mobilen Telefon (102, 1202) gehören, wobei das Verfahren aufweist:
Kommunizieren von Audiodaten eines ersten Telefonanrufs (124, 1224), der das mobile Telefon (102, 1202) involviert, mit einer oder mehreren ersten externen Audiovorrichtungen (104, 108); und
Kommunizieren von Audiodaten eines zweiten Telefonanrufs (126, 1226), der das mobile Telefon (102, 1202) involviert, mit einer oder mehreren zweiten externen Audiovorrichtungen (106), wobei der zweite Telefonanruf ein anderer Telefonanruf ist als der erste Telefonanruf,
wobei der erste Telefonanruf (124, 1224) und der zweite Telefonanruf (126, 1226) gleichzeitig sind für zumindest eine Zeitdauer, und
wobei jede der externen Audiovorrichtungen (104, 106, 108) eine Audioeingabefunktionalität und eine Audioausgabefunktionalität hat.

2. Verfahren gemäß Anspruch 1, wobei zumindest zwei der externen Audiovorrichtungen drahtlose Vorrichtungen (104, 106) sind, wobei das Verfahren weiter aufweist:
Aufbauen und Unterhalten getrennter drahtloser Kommunikationssitzungen zwischen dem mobilen Telefon (102, 702, 1202) und den drahtlosen Vorrichtungen (104, 106).

3. Mobiles Telefon (102, 1100, 1202), das aufweist:
eine erste drahtlose Kommunikationsschnittstelle (1120, 1130), über die das mobile Telefon (1100) mit einem externen Kommunikationsserver kommunizieren kann, um Telefonanrufe zu tätigen und zu empfangen; Mittel (1110, 918) für das mobile Telefon (1100) zur Kommunikation mit einer oder mehreren zugehörigen externen Audiovorrichtungen (104, 106, 108), von denen jede eine Audioeingabefunktionalität und eine Audioausgabefunktionalität hat;
einen Prozessor (1102), der mit der ersten drahtlosen Kommunikationsschnittstelle (1120, 1130) verbunden ist;
ein Audioteilsystem (916), das mit dem Prozessor (1102) verbunden ist; und
einen Speicher (1104), der mit dem Prozessor (1102) verbunden ist und ausgebildet ist, eine Telefonanwendung (903) zu speichern, die ausgebildet ist, das Audioteilsystem (916) zu steuern und gleichzeitige Telefonanrufe zu verwalten, die das mobile Telefon (102, 1100, 1202) involvieren, so dass Audiodaten eines ersten der gleichzeitigen Telefonanrufe (124, 1224) kommuniziert werden mit einer oder mehreren ersten externen Audiovorrichtungen (104, 108) und Audiodaten eines zweiten der gleichzeitigen Telefonanrufe (126, 1226) kommuniziert werden mit einer oder mehreren zweiten externen Audiovorrichtungen (106).

4. Mobiles Telefon (102, 1100, 1202) gemäß Anspruch 3, wobei zumindest eine der ersten externen Audiovorrichtungen eine drahtlose Vorrichtung (104) ist, und wobei die Mittel aufweisen:
eine zweite drahtlose Kommunikationsschnittstelle (1110), die mit dem Prozessor (1102) verbunden ist und über die das mobile Telefon (1100) mit einer oder mehreren drahtlosen externen Audiovorrichtungen (104, 106) kommunizieren kann.

5. Mobiles Telefon (102, 1100, 1202) gemäß Anspruch 4, wobei zumindest eine der zweiten externen Audiovorrichtungen eine verdrahtete Vorrichtung (108) ist, und wobei die Mittel aufweisen:
eine Audio-Hardware-Komponente (918), die mit dem Audioteilsystem (918) verbunden ist und die mit der verdrahteten Vorrichtung (108) verbunden werden kann.

6. Mobiles Telefon (102, 1100, 1202) gemäß Anspruch 4 oder 5, wobei der externe Kommunikationsserver eine mobile Vermittlungsstelle ist und die erste drahtlose Kommunikationsschnittstelle (1120) mit einem zellularen Kommunikationsstandard kompatibel ist.

7. Mobiles Telefon (102, 1100, 1202) gemäß einem der Ansprüche 4 bis 6,
wobei der externe Kommunikationsserver eine Internetprotokoll-Vermittlungsanlage ist und die erste drahtlose Kommunikationsschnittstelle (1130) mit einem drahtlosen lokalen Netzwerk-Standard kompatibel ist.

8. Maschinen-lesbares Medium, das Anweisungen speichert, die bei Ausführung durch zumindest einen Prozessor einer Computervorrichtung die Computervorrichtung ausbildet, das Verfahren gemäß Anspruch 1 oder Anspruch 2 durchzuführen.

## Revendications

1. Procédé destiné à l'utilisation de dispositifs audio externes (104, 106, 108) associés à un téléphone mobile unique (102, 1202), le procédé consistant à :
transmettre des données audio d'un premier appel téléphonique (124, 1224) faisant intervenir le téléphone mobile (102, 1202) à un ou plusieurs premiers dispositifs audio externes (104, 108) ; et
transmettre des données audio d'un deuxième appel téléphonique (126, 1226) faisant intervenir le téléphone mobile (102, 1202) à un ou plusieurs deuxièmes dispositifs audio externes (106), le deuxième appel téléphonique étant un appel téléphonique différent du premier appel téléphonique,
dans lequel le premier appel téléphonique (124, 1224) et le deuxième appel téléphonique (126, 1226) sont simultanés pendant au moins une période de temps, et
dans lequel chacun des dispositifs audio externes (104, 106, 108) a une fonctionnalité d'entrée audio et une fonctionnalité de sortie audio.

2. Procédé selon la revendication 1, dans lequel au moins deux des dispositifs audio externes sont des dispositifs sans fil (104, 106), le procédé consistant en outre à :
établir et maintenir des sessions de communication sans fil séparées entre le téléphone mobile (102, 702, 1202) et les dispositifs sans fil (104, 106).

3. Téléphone mobile (102, 1100, 1202), comprenant :
une première interface de communication sans fil (1120, 1130) par l'intermédiaire de laquelle le téléphone mobile (1100) est capable de communiquer avec un serveur de communications externe pour émettre et recevoir des appels téléphoniques ;
des moyens (1110, 918) permettant au téléphone mobile (1100) de communiquer avec un ou plusieurs dispositifs audio externes associés (104, 106, 108) dont chacun a une fonctionnalité d'entrée audio et une fonctionnalité de sortie audio ;
un processeur (1102) relié à la première interface de communication sans fil (1120, 1130) ;
un sous-système audio (916) relié au processeur (1102) ; et
une mémoire (1104) reliée au processeur (1102) et conçue pour stocker une application téléphonique (903) qui est apte à commander le sous-système audio (916) et à gérer des appels téléphoniques simultanés faisant intervenir le téléphone mobile (102, 1100, 1202) afin que des données audio d'un premier des appels téléphoniques simultanés (124, 1224) soient transmises à un ou plusieurs premiers dispositifs audio externes (104, 108) et que des données audio d'un deuxième des appels téléphoniques simultanés (126, 1226) soient transmises à un ou plusieurs deuxièmes dispositifs audio externes (106).

4. Téléphone mobile (102, 1100, 1202) selon la revendication 3, dans lequel au moins l'un des premiers dispositifs audio externe est un dispositif sans fil (104) et dans lequel les moyens comprennent :
une deuxième interface de communication sans fil (1110) reliée au processeur (1102) et par l'intermédiaire de laquelle le téléphone mobile (1100) est capable de communiquer avec un ou plusieurs dispositifs audio externes sans fil (104, 106).

5. Téléphone mobile (102, 1100, 1202) selon la revendication 4, dans lequel au moins l'un des deuxièmes dispositifs audio externes est un dispositif câblé (108), et dans lequel les moyens comprennent :
un composant matériel audio (918) relié au sous-système audio (918) et qui peut être connecté au dispositif câblé (108).

6. Téléphone mobile (102, 1100, 1202) selon la revendication 4 ou 5, dans lequel le serveur de communications externe est une station de commutation mobile et la première interface de communication sans fil (1120) est compatible avec une norme de communication cellulaire.

7. Téléphone mobile (102, 1100, 1202) selon l'une quelconque des revendications 4 à 6, dans lequel le serveur de communications externe est un central téléphonique public à Protocole Internet et la première interface de communication sans fil (1130) est compatible avec une norme de réseau local sans fil.

8. Support lisible par machine stockant des instructions qui, lorsqu'elles sont exécutées sur au moins un processeur d'un dispositif informatique, adaptent ledit dispositif informatique afin qu'il mette en oeuvre le procédé selon la revendication 1 ou la revendication 2.
